# EUROPEAN PATENT SPECIFICATION

(11) **EP 1 489 147 B1**
(45) Date of publication and mention of the grant of the patent: **03.11.2010**
(21) Application number: 04253563.3
(22) Date of filing: 15.06.2004
(51) Int. Cl.: C09D 4/00, C09D 133/06, C08F 220/10, C08F 220/20, B32B 7/06, B32B 17/10

(54) **A film having a coating with release properties**
Folie, enthaltend eine Beschichtung mit Trenneigenschaften
Film comprenant un revêtement anti-adhérent

(30) Priority: 21.06.2003 US 480039 P
(43) Date of publication of application: 22.12.2004
(73) Proprietor: CPFILMS Inc., Martinsville, Virginia 24089 (US)
(72) Inventor: Enniss, James P., Martinsville Virginia 24112 (US); Ballan, Daniel G., Martinsville Virginia 24112 (US); Richardson, Paula F., Danville Virginia 24541 (US)
(74) Representative: Stanley, Michael Gordon

(56) References cited:
- US-A- 5 236 968
- US-A- 5 714 305
- US-A- 5 869 179
- US-A- 6 100 313
- US-A1- 2003 087 981
- US-B1- 6 197 844
- US-B1- 6 224 949
- US-B1- 6 388 813

## Description

### Field

This invention relates to a coating for transparent polymeric film and in particular to film used in the manufacture of stacks of laminated clear film in which successive layers are removed after use to expose a new film layer.

### Background of the Invention

It is well known to use a plurality of superimposed transparent plastic films to form a stack of films for use as a protective cover for either a motorcycle helmet or a car windshield, see for example from DE 3227366, US 5592 698 and US 5002 326. The different layers of film are removed successively as each film surface becomes dirty to expose a new clean film surface to improve visibility for a driver. Such systems are typically applied to motor cycle helmet visors and racing car windscreens.

US 5714 305 describes a protective overlayer for use in thermal imaging US 5236 968 describes protective coating for use with polycarbonate injection mouldings. In US 5002 326 and US6388 813 the different layers of film are adhered to each other using a clear peel type adhesive on one side of the film which allows the one layer of film to adhere to the lower adjacent layer in the stack and be easily peeled from the lower layer. Evenso, there is sometimes a problem when one film layer is removed from a lower film layer in that the adhesive does not always release properly from the underlying film layer leaving patches of adhesive on the newly exposed clean film layer. This both interrupts the visibility of the driver and provide a site to which dirt, insects and other foreign bodies can adhere. Another problem that may occur , when the upper side of the film is coated with a scratch resistant hardcoat, is the partial removal of the hardcoat.

The present invention provides a coating for a protective film which aids the release of adhesive and an improved coated film having release surface.

### Statements of Invention

According to the present invention there is provided a protective laminate in use for laying over a surface and comprising a plurality of sheets of a transparent film composite stacked one on the other, each comprising a transparent polymeric film layer coated on one side with a coating including a cured acrylate resin containing 0.04-10% by weight of a siliconized acrylate resin and on its other side has an adhesive layer **characterised in that** the coating is a transparent hard coat which is scratch resistant to 0000 steel wool and has an abrasion resistance according to ASTM D1064-93 of less than 12%.

The preferred acrylate resin is a hard coat as is described in US 4557 980. A suitable siliconized acrylate material is Ebecryl 1360 available from UCB Chemical Corporation.

Each film layer may comprise one of polycarbonate, acrylic, polypropylene and PET , the preferred film being PET. Each film layer is preferably a PET ( polyethylene terephthalate) film about 4 mil (0.1mm) thick which may contain a UV absorbing material as is disclosed in US 6221 112.

Glazing includes any suitable transparent sheet material which may be used for motor cycle helmet visors, vehicle windscreens, aircraft canopies and windscreen and windows, PC Monitor Screens etc. and which include glass, acrylic sheet, polyester sheet, polycarbonate sheet.

On each film layer, the coating remains clear with haze of 1% or less and with high gloss having a 60 degree gloss of over 100 gloss units

In the preferred embodiment the hard coat has a thickness of between 1.5 - 2.0 microns . The hardcoat may also contain a nanoparticle dispersion therein. Nanoparticles should have a size of less than 0.1 microns diameter.

The other surface of each polymeric film layer is coated in a releasable clean peel adhesive , preferably Gelva GMS 3149 which in use adheres to the film layer but releases from said hard coat. The adhesive on the bottom layer may be covered with a release liner.

Such a composite provides a sacrificial layer which protects an underlying surface from damage due to abrasion by dirt etc.and in some applications may also act as an anti-graffiti film.

The laminate may further comprise a base layer which is adhered to the other side of the bottom film layer, the base layer comprising a solar control film , an example of which is disclosed in US 6416872 and US 6007901. Such a film has a high visible light transmission, typically at least 70%, and reflects IR light. The bottom surface of the base layer will be coated in an adhesive and covered with a release liner. Such a laminate is useful in the application to car windscreens , or other glazing, where heat sensitive items or components may be located behind the glazing, for example on a car dash board or facia panel.

### Description of the Drawings

The invention will be described by way of example and with reference to the accompanying drawings in which :
- Fig.1: is a cross-section through a protective film composite sheet which in use forms part of a laminate according to the present invention,
- Fig. 2: is a cross-section through a laminate according to the present invention shown in situ on glazing, and
- Fig. 3: is a cross-section through a second laminate also shown in situ on glazing.

### Detailed Description of the Invention

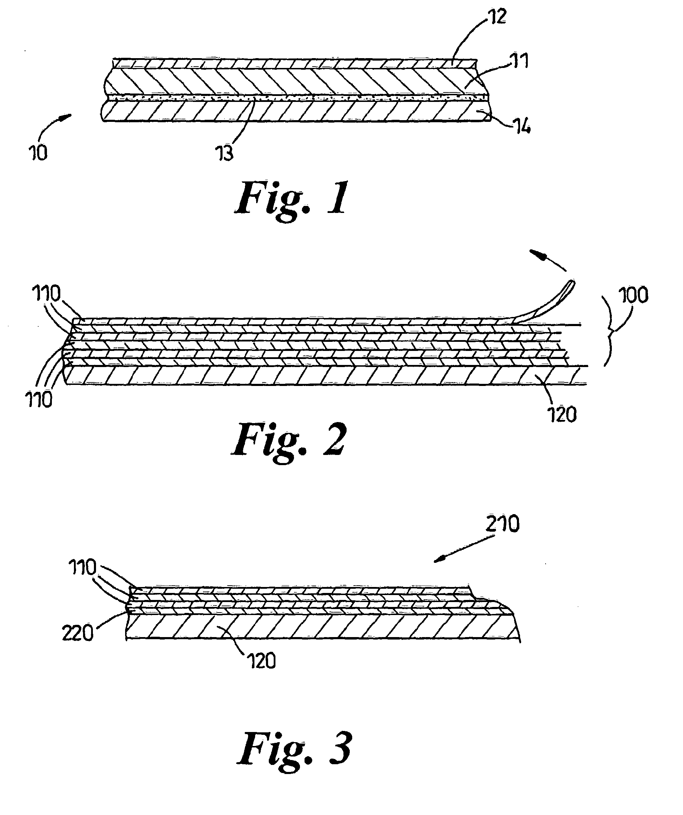

With reference to Fig 1 there is shown a protective film composite 10 comprising a suitable transparent polymeric film layer 11 coated on one side with a scratch resistant hardcoat 12 and on the other side with an adhesive layer covered with a protective release liner 14.

The adhesive layer 13 is a easy peel type adhesive for example Gelva GMS 3149 which adheres preferentially to the film. The release liner14 may comprise a polyethylene coated paper, or a silicone release coating which can be peeled from the adhesive leaving the adhesive layer on the film 11.

A suitable transparent film is a polyester film, preferably a polyethyleneterephthalate (PET) film treated with a UV absorber as described in US patent 6221 112B so as to absorb up to 99% of UV radiation. A suitable PET film is DuPont Teijin Films' Melinex 454 or LJX 112.

The hard coat 12 is a UV cured acrylate based resin which is formed from a liquid composition which is applied to the surface of the PET film by any suitable process. The coating composition may comprise a resin and solvent base as is described in US 4557 980. The coating used for hard coat layer 12 is formed from a liquid composition which is applied to the surface of the PET film by a reverse gravure process. The coating composition may comprise a resin and solvent base as is described in US 4 557 980 and typically comprise the constituents of Table 1 below.

**TABLE 1.**

| | |
|---|---|
| Acrylate resin | 30-75% |
| Acrylic Acid | 0-45% |
| Solvent | 0-40% |
| Photoinitiator | 2.4-5.0% |
| Siliconised Arylate | 0.04-10% |

The percentages are weight percentages of the coating mixture.

Sample coating were made to the composition given in table 2:

**TABLE 2**

| | |
|---|---|
| Acrylate resin | 50-60% |
| Acrylic acid | 35-45% |
| Solvent | 0-10% |
| Photointiator | 4.0-5.0% |
| Siliconised Acrylate | 0.04- 0.7% |

The percentages are weight percentages of the coating mixture.

Suitable siliconised acrylates are Ebccryl 1360 , and EB350 available from UCB Chemical Corporation.

The acrylate resin is preferably a mixture of pentaerythritol tetraacrylate and triacrylate mixture. A suitable materials is Sartomer SR-295 available from Sartomer (Total).

Suitable solvents, in addition to the acrylic acid which acts as a solvent, are isopropyl alcohol and MEK ( methylethyl ketone).

The ingredients for the coating are mixed together . The siliconised acrylate may be diluted in 50% MEK ( that is 50% based on the weight of siliconised acrylate) prior to addition. The stable mixture is stored for later use. The clear stable coating composition is applied using a reverse gravure process in a thickness of about 2 - 6 microns and coats evenly and levels smoothly. After application to the PET film the coating remains stable until drying, and UV curing after drying.

The final cured dried hard coat has a thickness of about 1.5- 17 microns.

The hard coat 13 may also include a dispersion of 20 - 25% by weight of nanoparticles of silica in the UV-cured polymeric resin. Nanoparticles have a particle size of 0.1 microns or less. The nanoparticles remain stably dispersed during film formation, drying and UV curing and do not make any significant contribution to haze or reduction in gloss. The nanoparticles are added to increase hardness and scratch resistance if required.

The hard coat has the following typical physical properties:
Haze < 1%,
Gloss 60 degree gloss 100 gloss units
Scratch resistant to 0000 Steel Wool
The Gloss was measured using a Byk Gardner Glossmeter.
Abrasion < 12%.
The haze was measured using a Hunter Laboratories Ultrascan XE and calculated according to ( Diffuse Transmittance/Total Transmittance) X 100 over a light range of 380-780 nm.

The scratch test is a subjective test in which the coating is rubbed with steel wool and viewed for scratching.

The abrasion test uses a Taber Abrader in accordance with ASTM D1044-93 using a CS10 wheels each loaded with 1kg. The results are quoted in an increase in haze after 100cycles.

The adhesion of the film composite to an underlying film composite must lie between particular limits. The adhesion must be sufficient to prevent easy release of the film composite for example during driving at race speeds where the film composite is used as a windscreen protector, but must not be so adhesive as to damage the hard coat.

The adhesion of the film composite 10 to a second underlying film composite 10 was tested for various film composites made in accordance with Table 2. Samples were tested for clean removal without damage to the hard coat of the underlying film by peeling a 2.54 cm ( 1 inch) width of strip from the underlying hard coat. As a control the strip was also peeled from hard coat having a similar formulation to that shown in Table 2 but which did NOT contain the siliconized acrylate.

For hard coat containing 0.07- 1.25% siliconized acrylate when dried, the release force for the peelable adhesive was 25-30 grams/ inch width (25.4mm) and for the control material 87 grams/inch width (2.54mm). The addition of the siliconized acrylate creates a low surface energy which enables an overlying sheet to be easily and quickly peeled from the hard coat. It is thought that the siliconized acrylate migrates to the surface so that its effect levels off after minimal additions of the siliconized material.

The low surface energy also renders the hard coat surface resistant to pens, markers etc. creating an anti-graffiti film composite.

Further formulations based on Table 2 , but outside of the scope of the present invention, were also formulated using about 7% by weight of acrylated silicone resin RC902 ( available from Goldschmidt Chemical Corporation, a division of Degussa) instead of siliconized acrylate , for tests for release properties. This chemical appeared to interfere with the curing of the hard coat . It would therefore appear that the release agent must contain an acrylate spine as opposed to a silicone spine.

The invention, as shown in Fig. 2, comprises a laminate 100 having a plurality of sheets of film composite 110, in this example 6 sheets, but any number of sheets of film composite as is desired, may be used to form a stack of superimposed sheets. The laminate 100 is shown adhered to a vehicle windscreen 120.

Each film composite 110 in the stack comprise a clear PET film layer 11 having a hard coat 12 on one side and an adhesive layer 13 on the other side as is shown in Fig. 1 The sheets are stacked so that the hard coats 12 face away from the glazing 120 and the adhesive layer 13 on one sheet adheres to the hard coat 12 of an underlying sheet. The use of the release agent in the hard coat enables the upper sheets of film composite 110 to be easily removed by peeling one sheet at a time from the stack.

A further embodiment is shown in Fig. 3 in which a second film laminate 210 , in this case three sheets of composite are shown but any number of sheets of composite 110 may be used as is desired, and a base layer 220 which lies adjacent the glazing 120. The base layer 220 comprises a suitable solar control film as is described in US 6416 872 and US 6007 901 and is typically a film having a high visible light transmission, above 70% VLT, and high reflectance in the infra red light range.

In an alternative arrangement the base layer may be dyed to reduce glare.

## Claims

1. A protective laminate (100) for laying over a surface (120) , and comprising a plurality of sheets of a transparent film composite (10) stacked one on the other, each comprising a transparent polymeric film layer (11) coated on one side with a transparent coating (12) including a cured acrylate resin containing 0.04-10% by weight of a siliconized acrylate resin and on its other side has an adhesive layer (13) **characterised in that** the coating (12) is a transparent hard coat which is scratch resistant to 0000 steel wool and has an abrasion resistance according to ASTM D 1064-93 of less than 12%.

2. A laminate as claimed in Claim 1, wherein each film layer (11) comprises PET (polyethylene terephthalate) film.

3. A laminate as claimed in Claim 2, wherein each PET film layer (11) contains a UV absorbing material.

4. A laminate as claimed in any one of Claims 1 to 3, wherein the hard coat (12) on each film layer is a substantially clear with haze of 1% or less, with high gloss having a 60 degree gloss of over 100 gloss units.

5. A laminate as claimed in any one of Claims 1 to 4, wherein the adhesive layer (13) of the bottom sheet is covered with a release liner (14).

6. A laminate as claimed in any one of Claims 1 to 4, overlying a base layer (220) which is adhered to the other side of the bottom film layer (11), the base layer (220) comprising a solar control film.

7. A laminate as claimed in Claim 6, wherein the solar control film is a heat mirror having a high visible light transmission of at least 70%, and which reflects IR light.

8. A laminate as claimed in Claim 6 or Claim 7, wherein the base layer is dyed to reduce glare.

## Patentansprüche

1. Schutzlaminat (100) zum Legen auf eine Oberfläche (120), das mehrere Blätter eines transparenten Folienverbundstoffs (10) umfasst, die eines auf das andere aufgeschichtet sind, wobei jedes eine transparente polymere Folienlage (11) umfasst, die auf einer Seite mit einer transparenten Beschichtung (12) beschichtet ist, die ein ausgehärtetes Acrylatharz umfasst, das 0,04-10 Gew.-% eines silikonisierten Acrylatharzes enthält, und auf ihrer anderen Seite eine Klebstoffschicht (13) aufweist, **dadurch gekennzeichnet, dass** die Beschichtung (12) ein transparenter harter Überzug ist, der gegen Stahlwolle Nr. 0000 kratzfest ist und eine Abriebfestigkeit ASTM D 1064-93 gemäß von weniger als 12 % aufweist.

2. Laminat nach Anspruch 1, wobei jede Folienlage (11) PET-(Polyethylenterephthalat-) Folie umfasst.

3. Laminat nach Anspruch 2, wobei jede PET-Folienlage (11) UV absorbierendes Material enthält.

4. Laminat nach einem der Ansprüche 1 bis 3, wobei der harte Überzug (12) auf jeder Folienlage im Wesentlichen klar, mit einer Trübe von 1 % oder weniger, mit hohem Glanz von mehr als 100 Glanzeinheiten bei 60 Grad.

5. Laminat nach einem der Ansprüche 1 bis 4, wobei die Klebstoffschicht (13) des unteren Blatts mit einem Trennpapier (14) bedeckt ist.

6. Laminat nach einem der Ansprüche 1 bis 4, das auf einer Grundschicht (220) aufliegt, die an der anderen Seite der unteren Folienlage (11) befestigt ist, wobei die Grundschicht (220) eine Sonnenkontrollfolie umfasst.

7. Laminat nach Anspruch 6, wobei die Sonnenkontrollfolie ein Wärmespiegel ist, der eine hohe Durchlässigkeit für sichtbares Licht von mindestens 70 % aufweist und der IR-Licht reflektiert.

8. Laminat nach Anspruch 6 oder Anspruch 7, wobei die Grundschicht zum Reduzieren von blendendem Licht gefärbt ist.

## Revendications

1. Stratifié protecteur (100) pour revêtement sur une surface (120), et comprenant une pluralité de feuilles d'un composite de film transparent (10) empilées l'une sur l'autre, comprenant une face avec un revêtement transparent (12) incluant une résine acrylate durcie contenant chacune une couche de film polymère transparent (11) revêtue sur 0,04 à 10 % en poids d'une résine acrylate siliconée et sur son autre face possède une couche adhésive (13) **caractérisé en ce que** le revêtement (12) est une couche dure transparente qui est résistante aux rayures à la laine d'acier 0000 et a une résistance à l'abrasion selon la norme ASTM D1064-93 inférieure à 12 %.

2. Stratifié tel que revendiqué selon la revendication 1, dans lequel chaque couche formant film (11) comprend un film en PET (poly(téréphtalate d'éthylène)).

3. Stratifié tel que revendiqué selon la revendication 2, dans lequel chaque couche formant film en PET (11) contient un matériau absorbant le rayonnement UV.

4. Stratifié tel que revendiqué selon l'une quelconque des revendications 1 à 3, dans lequel la couche dure (12) sur chaque couche formant film est substantiellement claire avec un indice de trouble de 1 % ou moins, avec un brillant élevé ayant un brillant à 60 degrés de plus de 100 unités de brillance.

5. Stratifié tel que revendiqué selon l'une quelconque des revendications 1 à 4, dans lequel la couche adhésive (13) de la feuille inférieure est revêtue d'un revêtement anti-adhérent (14).

6. Stratifié tel que revendiqué selon l'une quelconque des revendications 1 à 4, recouvrant une couche de base (220) qui est fixée à l'autre face de la couche inférieure formant film (11), la couche de base (220) comprenant un film de protection solaire.

7. Stratifié tel que revendiqué selon la revendication 6, dans lequel le film de protection solaire est un miroir thermique ayant une transmission élevée de la lumière visible d'au moins 70 %, et qui reflète la lumière IR.

8. Stratifié tel que revendiqué selon la revendication 6 ou la revendication 7, dans lequel la couche de base est teintée pour réduire l'éblouissement.
